# EUROPÄISCHE PATENTSCHRIFT

(11) **EP 2 196 011 B1**
(45) Veröffentlichungstag und Bekanntmachung des Hinweises auf die Patenterteilung: **08.11.2017**
(21) Anmeldenummer: 07818300.1
(22) Anmeldetag: 20.09.2007
(51) Int. Cl.: H04M 3/42, H04L 12/58

(54) **VERFAHREN UND KOMMUNIKATIONSANORDNUNG ZUM BETREIBEN EINER KOMMUNIKATIONSVERBINDUNG**
METHOD AND COMMUNICATIONS ARRANGEMENT FOR OPERATING A COMMUNICATIONS CONNECTION
PROCÉDÉ ET SYSTÈME DE COMMUNICATION POUR EXPLOITER UNE LIAISON DE COMMUNICATION

(43) Veröffentlichungstag der Anmeldung: 16.06.2010
(73) Patentinhaber: Unify GmbH & Co. KG, 80807 München (DE)
(72) Erfinder: LEDERER, Thomas, 82211 Herrsching (DE)
(74) Vertreter: Fritzsche, Thomas
(86) Internationale Anmeldenummer: PCT/EP2007/008210
(87) Internationale Veröffentlichungsnummer: WO 2009/039867

(56) Entgegenhaltungen:
- US-A1- 2005 128 961
- US-B1- 6 289 373
- US-B1- 6 463 148

## Beschreibung

Die Erfindung betrifft ein Verfahren sowie eine Kommunikationsanordnung zum Betreiben einer Kommunikationsverbindung.

Im Arbeitsalltag von Büroangestellten einer Firma werden heutzutage zur Kommunikation zu anderen Teilnehmern, insbesondere derselben Firma, einerseits Telefonverbindungen aber andererseits gleichberechtigt auch Emailverbindungen eingesetzt. Häufig ergibt sich dabei ein Ablauf, bei dem zuerst eine Emailkommunikation stattgefunden hat und darauf basierend, eventuell weil einige besprochene Punkte nicht abschließend geklärt wurden, eine Telefonverbindung von einem der Emailteilnehmer zu einem der anderen Emailteilnehmer aufgebaut wird. Hierbei ist es häufig ineffektiv, dass der anrufende Teilnehmer dem angerufenen Teilnehmer erst einmal den Kontext erläutern muss, aufgrund dessen er den anderen Teilnehmer anruft, d.h. dass er häufig Teile der Email noch einmal verbal wiederholt, damit der andere Teilnehmer erkennt um welches Problem es sich handelt. Dies kann in bestimmten Fällen zu einem zeitaufwendigen Austausch von eigentlich schon bekannten Informationen oder in anderen Fällen auch zu Missverständnissen führen.

In US 6,289,373 B1 sind ein Verfahren und eine Anordnung beschrieben zur Verarbeitung einer Emailnachricht in einem automatischen Rufprozessor. Das Verfahren beinhaltet die Schritte des Bestimmens der Telefonnummer des Senders der Emailnachricht, des Einrichtens einer Rufverbindung zwischen dem automatischen Rufverteiler und dem Sender der Emailnachricht basierend auf der bestimmten Telefonnummer und des Zurverfügungstellens der Rufverbindung an einen Agenten des Rufverteilers.

In US 2005/0128961 A1 ist ein Internetprotokoll-Netzwerktelefonie-Callcenter beschrieben, das eine Vielzahl an Agenten zur Bedienung von Kunden aufweist und auch an das Callcenter gerichtete Emailadressen verarbeitet, allerdings nicht in Richtung spezifischer Agenten. Ein Emailserver empfängt die Email und leitet diese weiter, wobei der Emailserver einen Router und eine Datenbank beinhaltet, in der Informationen hinsichtlich der Fähigkeiten von Agenten gespeichert sind. Der Router extrahiert Informationen aus den Emails, gleicht Schlüsselworte in der extrahierten Information mit Schlüsselworten aus den gespeicherten Fähigkeiten ab, und leitet die Emails an geeignete Agenten weiter, die die notwendigen Fähigkeiten aufweisen um auf die Dienstleistungsanforderungen in den Emails antworten zu können.

Es ist Aufgabe der Erfindung Telefonkommunikationsverbindungen oder andere Echtzeitkommunikationsverbindungen in vereinfachter Form zu initiieren und effektiver durchzuführen.

Gelöst wird diese Aufgabe durch ein Verfahren mit den Merkmalen gemäß Patentanspruch 1 sowie durch ein Kommunikationssystem mit den Merkmalen gemäß Patentanspruch 15. Vorteilhafte Ausgestaltungen und Weiterbildungen sind darüber hinaus in den abhängigen Ansprüchen angegeben.

Das erfindungsgemäße Verfahren betrifft ein Verfahren zum Betreiben einer Kommunikationsverbindung zwischen einer einem ersten Teilnehmer zugeordneten Kommunikationsendeinrichtung und zumindest einer einem zweiten Teilnehmer zugeordneten ersten Endeinrichtung. Bei diesem Verfahren wird für einen auf einer mit einer ersten Kommunikationsendeinrichtung interagierenden durch den ersten Teilnehmer zu bedienenden zweiten Endrichtung ablaufenden Prozess, der frei von Funktionen zum Steuern der Kommunikationsverbindung ist, aus einer durch den Prozess bewirkten Ausgabe an der zweiten Endeinrichtung zumindest eine an einer Endeinrichtung wiedergebbare Information extrahiert. Bei der Ausgabe kann es sich dabei beispielsweise um einen Text, eine Grafik oder um Multimedia handeln, die wiedergebbare Information entspricht einer kodierten durch Endeinrichtungen bzw. Kommunikationsendeinrichtungen zu verarbeitende Darstellung einer derartigen Ausgabe. In dem erfindungsgemäßen Verfahren wird bei Initiieren der Kommunikationsverbindung zwischen der Kommunikationsendeinrichtung und der ersten Endeinrichtung die wiedergebbare Information zu mindestens einer der zum zweiten Teilnehmer zugeordneten mindestens einen Endeinrichtung übermittelt.

Das Verfahren ist insofern vorteilhaft als das mittels der Übertragung der wiedergebbaren Information dem zweiten Teilnehmer Informationen zugeführt werden, die einen Kontext erläutern, aus dem heraus der erste Teilnehmer die Kommunikationsverbindung initiiert hat. In einem einfachen Beispiel kann beispielsweise der erste Teilnehmer auf einem Arbeitsplatzrechner als zweite Endeinrichtung eine Email geöffnet haben und basierend auf dieser Email einen Anruf zum Sender der Email aufbauen. In diesem Fall kann aus dem geöffneten Inhalt der Email ein Text, beispielsweise die Betreffzeile der Email, extrahiert werden und bei Initiieren der Telefonverbindung zum zweiten Teilnehmer, d.h. dem Sender der ursprünglichen Email, diesen Text zusammen mit eventuell der Signalisierung der Kommunikationsverbindung an eine Endeinrichtung des zweiten Teilnehmers übermittelt werden, so dass diesem dieser Text an mindestens einer der ihm zugeordneten Endeinrichtungen angezeigt werden kann.

Erfolgt die Anzeige bereits vor endgültigem Durchschalten der Verbindung und somit bereits vor Rufannahme bei Initiierung der Verbindung zusammen mit einer akustischen bzw. optischen Signalisierung des eingehenden Rufes an der gerufenen Endeinrichtung, so kann der angerufene Teilnehmer bereits zu diesem frühen Zeitpunkt erkennen, zu welchem thematischen Inhalt das folgende Gespräch geführt werden soll. Folglich ist nach Durchschalten der Kommunikationsverbindung keine langwierige verbale Einführung durch den ersten Teilnehmer nötig, um den zweiten Teilnehmer die nun folgende Thematik des Telefongesprächs bekanntzumachen. Telefongespräche können somit effektiver und schneller durchgeführt werden.

Wie bereits erläutert, handelt es sich bei der Kommunikationsverbindung insbesondere um Echtzeitverbindungen z.B. für Telephonie oder für Multimediakommunikation. Bei der dem ersten Teilnehmer zugeordneten Kommunikationsendeinrichtung handelt es sich vorzugsweise um ein klassisches Telefonendgerät oder um einen so genannten Softclient der Telephoniefunktionen auf einem Arbeitsplatzrechner zur Verfügung stellt. Gleiches gilt ebenso für die erste Endeinrichtung des zweiten Teilnehmers. Die zweite Endeinrichtung des ersten Teilnehmers ist vorzugsweise ein Arbeitsplatzrechner eines Mitarbeiters einer Firma, der entweder zu einem Telefonkommunikationssystem gekoppelt ist, beispielsweise mittels CTI-Kopplung (CTI: Computer Telephony Integration), oder im Fall, bei dem es sich bei der Kommunikationsendeinrichtung um einen Softclient handelt, ist die zweite Endeinrichtung der Arbeitsplatzrechner selbst, auf dem der Softclient abläuft. Bei der zweiten Endeinrichtung kann es sich aber auch um jegliche andere Art von Rechnereinrichtung handeln, die an ein Telefonnetz gekoppelt werden kann. Beispielsweise ist denkbar, dass es sich bei der zweiten Endeinrichtung um einen Fernseher mit einer neuartigen Benutzerschnittstelle handelt, die es ermöglicht, Inhalte des Fernsehbildes oder der textuellen Informationen des Fernsehsignales - Videotext oder ein elektronische Programmzeitschrift EPG (Electronic Program Guide) - zu extrahieren und als wiedergebbare Information übertragbar bereitzustellen.

Bei der wiedergebbaren Information handelt es sich vorzugsweise um eine Repräsentation eines Textes, eines Multimediainhaltes oder einer Grafik, bevorzugt dargestellt in einem Dokumentenfenster einer Benutzeroberfläche, die über eine Signalisierungsverbindung zu einer zweiten Endeinrichtung übertragen werden kann. Bei Texten wäre dies beispielsweise eine ASCII-Codierung (ASCII: American Standard Code for Information Interchange), bei Grafik eine Codierung im JPG-(Joint Photographic Experts Group), GIF- (Graphics Interchange Format) oder PNG-Format (PNG: Portable Network Graphics). Jede der Inhalte kann dabei je nach Umfang eventuell komprimiert werden, so dass eine Übertragung ohne größere Belastung der Daten- oder Telefonleitungen möglich ist.

In einer vorteilhaften Ausgestaltung der Erfindung können dem zweiten Teilnehmer mehrere Endeinrichtungen zugeordnet sein, die unterschiedliche Funktionalitäten aufweisen. Dabei kann es vorteilhaft sein, eine der Endeinrichtungen derart auszuwählen, dass diejenige Endeinrichtung für die Übermittlung und/oder eine Ausgabe ausgewählt wird, die für eine Ausgabe der wiedergebbare Information spezifisch ausgebildet ist bzw. optimiert ist. Beispielsweise kann eine kurze textuelle Information zu einem Telefon mit Display übertragen werden, damit dort die Ausgabe stattfindet. Eine Grafik dagegen sollte vorzugsweise nur an eine Endeinrichtung übertragen werden, die eine Fähigkeit aufweist, diese Grafik auszugeben. Dies ist bei den heute üblichen Endeinrichtungen, die bei Firmen zur Telephonie eingesetzt werden nicht der Fall, so dass in diesem Fall eine Übertragung an einen Arbeitsplatzrechner sinnvoll erscheint. Doch es wird angenommen, dass in zukünftigen Firmennetzen auch vermehrt grafikfähige Telefonendeinrichtungen eingesetzt werden, so dass in diesem Fall eine Grafik auch an eine Telefonendeinrichtung übertragen werden kann.

Die Übertragung der wiedergebbaren Information kann einerseits über ein Telefonkommunikationsnetz erfolgen oder aber auch über ein Datennetz. Bei einem Datennetz kann es sich beispielsweise um ein auf TCP/IP-basiertes LAN (TCP/IP: Transmission Control Protocol/Internet Protocol; LAN: Local Area Network) handeln an dem üblicherweise die Arbeitsplatzrechner der Mitarbeiter einer Firma angeschlossen sind. Darüber hinaus werden in heutigen Implementierungen häufig auch Telefone an derartige Datennetzwerke angeschlossen.

Vorzugsweise kann die Kommunikationsverbindung in dem Fall, in dem eine Übertragung über ein Telefonkommunikationsnetz bzw. über ein Protokoll zur Telefonie erfolgt, über eine Signalisierungsverbindung zwischen der ersten Kommunikationsendrichtung und der ersten Endeinrichtung des zweiten Teilnehmers durchgeführt werden. Die Übermittlung der wiedergebbaren Information erfolgt in diesem Fall im Rahmen der Signalisierungsverbindung beispielsweise im D-Kanal (D: Data) einer ISDN-Verbindung (ISDN: Integrated Services Digital Network) oder in entsprechenden Signalisierungspaketen gemäß H.323 bzw. SIP (Session Initiation Protocol), der durch die ITU-T (International Telecommunication Union, Standardisierungssektor Telekommunikation) definiert bzw. IETF (Internet Engineering Task Force) definiert worden sind. Zur Übertragung kann je nach Umfang der wiedergebbaren Information auf bestehende Protokoll-Elemente zurückgegriffen oder neu einzuführende Protokollelemente verwendet werden. Hierbei kann es sich vorzugsweise um optionale Protokollelemente handeln, so dass eine Kompatibilität zu Endeinrichtungen, die keine derartige Ausgabefunktion aufweisen, gegeben ist.

Bei dem erfindungsgemäßen Prozess, der die Ausgabe an der zweiten Endeinrichtung bewirkt, kann es sich im Fall eines Arbeitsplatzrechners um jegliche Art von Anwendung handeln, die eine Ausgabe an einem Bildschirm bewirkt. Gemeint ist hierbei insbesondere eine Anwendung, die nicht originär für eine Kommunikation mittels Telefon- oder Multimedia-Verbindung ausgestaltet ist. Dabei kann es sich beispielsweise um eine beliebige Büroanwendung handeln wie beispielsweise eine Textverarbeitung, eine Tabellenkalkulation, ein Emailprogramm, ein Grafikprogramm oder jegliche andere Anwendung, die eine grafische, textuelle oder multimediale Ausgabe bewirkt. Vorzugsweise handelt es sich bei der wiedergebbaren Information aber nicht um in der Anwendung fest einprogrammierte Beschriftungen - häufig als Label bezeichnet - sondern um Informationen, die auf irgendeine Art und Weise durch einen Benutzer durch Bedienung des Programms manuell erzeugt wurden. Darunter ist beispielsweise im Fall einer Email die Betreffzeile oder der Inhalt einer Email zu verstehen. Im Falle einer Textdatei ist darunter beispielsweise der Inhalt einer Textdatei oder der Dateiname der Datei zu verstehen. Diese Information muss dabei nicht zwingend durch den ersten Teilnehmer editierbar sein bzw. durch diesen vorgegeben worden sein, sondern vorzugsweise handelt es sich um einen Inhalt der durch eine beliebige Person einer Arbeitsgruppe, zum Beispiel auch durch den zweiten Teilnehmer, editiert worden ist, wobei die betroffene Datei evtl. erst durch Übertragung mittels Datenverbindung oder Email an den ersten Teilnehmer gelangt sein kann.

Im Falle einer Emailanwendung kann beispielsweise aus einem dargestellten Fenster einer Email die Betreffzeile extrahiert werden und als wiedergebbare Information an die erste Endeinrichtung des zweiten Teilnehmers übermittelt werden. Somit steht für den zweiten Teilnehmer die Möglichkeit bereits bei Initiieren einer Kommunikationsverbindung den Inhalt der Betreffzeile angezeigt zu bekommen, so dass dieser bereits vor Annahme des Rufes erkennt, um welche Thematik es sich bei dem eingehenden Anruf handelt.

Da übliche Arbeitsplatzrechner derart ausgestaltet sind, dass mehrere Prozesse quasi gleichzeitig ablaufen können und dass mehrere Anwendungen Teile des Bildschirmes belegen können, sowie dass einzelne Anwendungen obwohl sie eine grafische Ausgabe besitzen, ikonisiert sein können und somit, obwohl aktiv, zu einem bestimmten Zeitpunkt nicht am Bildschirm dargestellt werden, kann ein Verfahren vorgesehen sein, durch das bestimmt wird, welche der aktiven Anwendungen für die Extraktion der wiedergebbaren Information ausgewählt wird. Beispielsweise kann dies so ablaufen, dass diejenige Anwendung ausgewählt wird, in der sich gerade der Eingabefokus - z.B. angezeigt durch eine blinkende Eingabeaufforderung oder durch andersfarbliche Darstellung eines Fensters - befindet und/oder die sich im Vordergrund aller dargestellten Fenster befindet.

Eventuell kann auch ausgewertet werden, ob gewisse Bereiche eines Bildschirmes durch einen Mauszeiger oder durch eine andere Art und Weise ausgewählt worden sind, so dass dieser ausgewählte Bereich bevorzugt für die Extraktion für die wiedergebbare Information verwendet werden kann. Wurde beispielsweise in einer Email ein Anhang selektiert oder markiert, so kann dieser für die Übertragung als wiedergebbare Information verwendet werden.

Zur Bestimmung, aus welchem Fenster nun die wiedergebbare Information extrahiert werden soll, kann zum Zeitpunkt des Rufauslösens der Kommunikationsverbindung der zu diesem Zeitpunkt gerade aktive Prozess ermittelt werden. Aus dieser wird dann die wiedergebbare Information extrahiert.

Vorteilhafterweise kann bei einer Fensteranwendung auf einem Arbeitsplatzrechner auch die Kopfzeile eines Fensters extrahiert werden. Dies ist insbesondere bei Browseranwendungen vorteilhaft, bei denen die Kopfzeile üblicherweise die dargestellte Information im Browserfenster mit kurzen Schlagworten beschreibt. Alternativ kann der Inhalt eines dargestellten Dokuments auch durch strukturelle Analyse des Dokuments erfasst werden und daraufhin die wiedergebbare Information extrahiert werden. Beim Beispiel Browseranwendung kann somit vorgesehen sein, die Definition des HTML-Tags (HTML: Hyper Text Markup Language) H1 - definiert eine Überschrift der höchsten Gliederungsstufe - einer Webseite, auszuwerten und als wiedergebbare Information auszuwerten. Dies ist analog dazu für alle Dokumententypen möglich, die eine klare Gliederungsstruktur aufweisen, und ist bei allen Textverarbeitungen oder auf XML (Extensible Markup Language) basierten Dateitypen gegeben.

In einer vorteilhaften Ausgestaltung der Erfindung kann das erfindungsgemäße Verfahren mit einer Rufumleitungsfunktion erfinderisch gekoppelt werden. Beispielsweise kann vorgesehen sein, dass bereits vor Rufannahme und bei bzw. nach Darstellung der wiedergebbaren Information an der Endeinrichtung des zweiten Teilnehmers die Möglichkeit angeboten wird, eine Rufumleitung einzulegen. Somit besteht für den zweiten Teilnehmer die Möglichkeit bereits aufgrund der angezeigten wiedergebbbaren Information zu entscheiden, ob nicht ein weiterer Mitarbeiter bevorzugt den Anruf behandeln sollte, so dass er nach einer entsprechenden Benutzeraktion den eingehenden Ruf an diesen weiteren Mitarbeiter weiterleiten kann.

Vorzugsweise kann dabei ein regelbasiertes System existieren, aufgrund dessen den zweiten Teilnehmer ein bevorzugtes Umleitungsziel angeboten wird oder aufgrund dessen sogar automatisch eine Umleitung zu einem weiteren Umleitungsziel erfolgt. Zu diesem Zweck kann ein Satz von Regeln definiert werden, die basierend auf Schlüsselwörtern oder Schlüsselinformationen, die aus der wiedergebbaren Information extrahiert werden, für eine Rufumleitung zu vorab konfigurierten weiteren Endeinrichtungen ausgewertet werden. Beispielsweise kann auch die Dringlichkeit eines eingehenden Anrufes basierend auf Schlüsselwörtern der wiedergebbaren Information erkannt werden, so dass obwohl ein Teilnehmer an seinem Arbeitsplatztelefon nicht präsent ist, bei hoher Dringlichkeit eine automatische Weiterleitung an sein Handy bzw. sein Mobiltelefon erfolgen kann. Eine Konfiguration entsprechender Regeln kann vorzugsweise durch den zweiten Teilnehmer selbst oder durch zentral vorgegebene Regeln für alle Teilnehmer erfolgen.

Vorzugsweise können basierend auf Regeln neben der Rufumleitung auch weitere Leistungsmerkmale aktiviert werden. Beispielsweise kann, wenn durch das System erkannt wird dass der Anruf auf eine Email basiert bzw. eine Folge einer Email ist, die an mehrere Teilnehmer gerichtet war, eine Telefonkonferenz zu allen diesen Teilnehmern aufgebaut werden. Darüber hinaus kann durch das erfindungsgemäße Verfahren auch im Rahmen des Leistungsmerkmals "Anklopfen" umgesetzt werden, dass während der zweite Teilnehmer bereits ein aktives Gespräch führt beim Anklopfen bereits der Inhalt der wiedergebbaren Information dargestellt wird, so dass der zweite Teilnehmer einen Hinweis erhält, ob es sich rentiert die bestehende Verbindung aufzulösen und die eingehende Verbindung - im Wortlaut des Anspruchs also die Kommunikationsverbindung - vom ersten Teilnehmer anzunehmen.

In einer Weiterbildung des erfindungsgemäßen Verfahrens kann vorgesehen sein, dass die wiedergebbare Information entsprechend der Ausgabemöglichkeiten der ersten Endeinrichtung angepasst bzw. verändert wird. Hierbei kann es sich beispielsweise um eine so genannte Text-to-Speech-Konvertierung handeln oder eine neuartige Grafik-zu-Text-Umwandlung handeln, bei der der wesentlich Inhalt der wiedergebbaren Information extrahiert wird und für das entsprechende Ausgabemedium optimiert wird.

In einer weiteren Ausgestaltung des Verfahrens kann vorgesehen sein, dass extrahieren der wiedergebbaren Information erst nach Beginn der Abarbeitung des ersten Schrittes zum Initiieren der Kommunikationsverbindung durchzuführen. Alternativ kann vorgesehen sein, bereits vor der ersten Aktion zum Initiieren der Kommunikationsverbindung jeweils für ein aktives Fenster oder für alle ablaufenden Prozesse bereits vorab eine wiedergebbare Information zu bestimmen, eventuell zu extrahieren und für einen Kommunikationsaufbau vorzuhalten. Letzteres kann dann den Aufbau der Kommunikationsverbindung beschleunigen.

Die vorstehend gemachten Ausführungen auf analoge Weise auch für die erfindungsgemäße Kommunikationsanordnung.

Weitere vorteilhafte Ausgestaltungen und Weiterbildungen werden im Folgenden im Rahmen einer Zeichnung weiterführend erläutert.

Dabei zeigen jeweils in schematischer Darstellung die
- Figur 1: eine Kommunikationsanordnung zur Umsetzung des erfindungsgemäßen Verfahrens,
- Figur 2: verschiedene Ausgestaltungen für eine Ausgabe eines erfindungsgemäßen Prozesses.

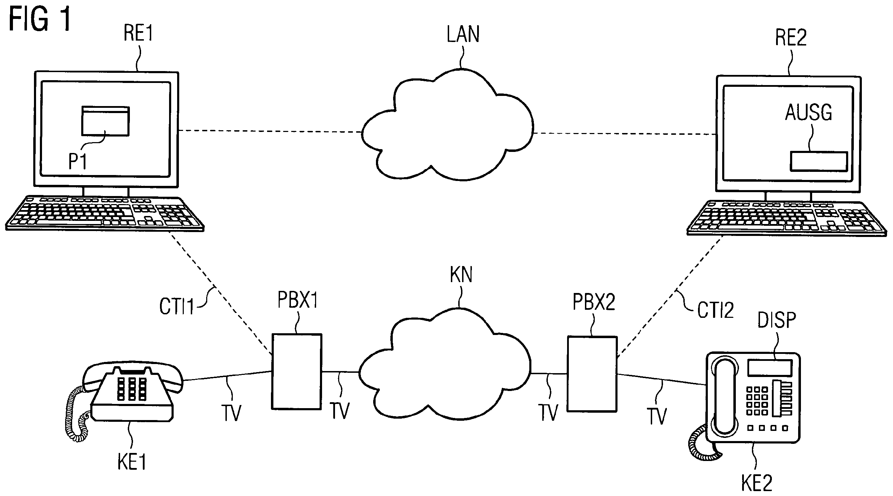

In Figur 1 ist in schematischer Darstellung eine Kommunikationsanordnung zur Umsetzung des erfindungsgemäßen Verfahrens dargestellt. Die Kommunikationsanordnung umfasst eine erste Kommunikationsendeinrichtung KE1 als erfindungsgemäße Kommunikationsendeinrichtung, die mittels einer Telefonverschaltung TV an eine erste Vermittlungsanlage PBX1 gekoppelt ist. Darüber hinaus weist die erste Vermittlungsanlage PBX1 eine Computer-Telefonanlagen-Kopplung CTI1 zu einer Rechnereinrichtung RE1 als erfindungsgemäße zweite Endeinrichtung auf. Die erste Vermittlungsanlage PBX1 ist darüber hinaus über ein Kommunikationsnetz KN und jeweiligen Telefonverschaltungen TV mit einer zweiten Vermittlungsanlage PBX2 gekoppelt, an der wiederum mehrere Kommunikationsendeinrichtungen betrieben werden können. Beispielhaft ist eine dieser Kommunikationseinrichtungen dargestellt, die Kommunikationsendeinrichtung KE2 als erfindungsgemäße erste Endeinrichtung. Die Kopplung zwischen der zweiten Kommunikationsendeinrichtung KE2 und der zweiten Vermittlungsanlage PBX2 ist wiederum durch eine Telefonverschaltung TV mittels einer durchgezogenen Linie angedeutet. Weiterhin weist auch die zweite Vermittlungsanlage PBX2 eine Kopplung an ein Rechnernetzwerk bzw. an verschiedene Rechner auf. Beispielhaft ist die zweite Computer-Telefonanlagen-Kopplung CTI2 dargestellt, mittels der eine Kopplung zur zweiten Rechnereinrichtung RE2 ermöglicht wird. Zusätzlich zu der, bisher lediglich für Telefonverbindungen bereitgestellten Verbindungsmöglichkeiten, ist in Figur 1 eine Verschaltung zwischen den beiden Rechnereinrichtungen RE1 und RE2 über ein lokales Netzwerk LAN durch gestrichelte Linien angedeutet.

Für die Computer-Telefonanlagen-Kopplungen CTI1, CTI2 möglicherweise benötigte residente Programme oder Hintergrundprozesse, die auf den jeweiligen Rechnereinrichtungen RE1, RE2 ablaufen, werden im Folgenden nicht weiter erläutert. Doch sollte einem Fachmann klar sein, dass die Rechnereinrichtungen RE1, RE2 für den Betrieb von Verbindungen ins LAN oder zu den Vermittlungsanlagen PBX1, PBX2 vorbereitet sein müssen.

Ein auf der ersten Rechnereinrichtung RE1 ablaufender Prozess wird in Figur durch dessen Ausgabefenster, dem Prozessfenster P1, veranschaulicht. Ausgabemöglichkeiten bei der zweiten Kommunikationsendeinrichtung KE2 werden mittels einer Anzeigeeinheit DISP verdeutlicht, die beispielsweise durch ein übliches LC-Display (LC: Liquid Crystal) implementiert sein kann. Eine weitere Ausgabemöglichkeit mittels der zweiten Rechnereinrichtung RE2 wird durch ein auf einer Oberfläche der zweiten Rechnereinrichtung RE2 dargestellten Anzeigefenster AUSG angedeutet.

Es sei angenommen, dass die erste Kommunikationsendeinrichtung KE1 sowie die erste Rechnereinrichtung RE1 durch einen als ersten Teilnehmer bezeichneten Mitarbeiter einer Firma bedient werden. Analog dazu werden die zweite Kommunikationsendeinrichtung KE2 und die zweite Rechnereinrichtung RE2 durch einen zweiten Teilnehmer bedient.

Ausgangssituation für das folgende erläuterte Verfahren sei, dass die Kommunikationsendrichtungen KE1 und KE2 sich jeweils im Ruhezustand befinden und dass auf der ersten Rechnereinrichtung RE1 das Prozessfenster P1 dargestellt wird. Beispielhaft sei angenommen, dass das Prozessfenster P1 eine Ausgabe einer empfangenen Email sei, inkl. der üblichen Komponenten eines derartigen Fensters, beispielsweise einer Ausgabe für Empfangsadresse, Sendeadresse, Betreffzeile und Inhalt der eigentlichen Nachricht.

Es sei weiterhin angenommen, dass der erste Teilnehmer bei Studieren der im Prozessfenster P1 dargestellten Ausgabe erkennt, dass er dem zweiten Teilnehmer eine Nachricht hinterlassen möchte, bzw. eine Rückfrage bei diesem tätigen möchte. Folglich wird der erste Teilnehmer mittels der ersten Kommunikationsendeinrichtung KE1 im Folgenden versuchen einen Ruf aufzubauen, mit dem Zweck eine Verbindung zum zweiten Teilnehmer über die zweite Kommunikationsendeinrichtung KE2 durchzuschalten.

Ausgelöst durch den Abschluss des Wählvorganges bzw. durch die Auswahl der Rufnummer des zweiten Teilnehmers aus einer Anruferliste wird nun der ersten Vermittlungsanlage PBX1 ein Rufaufbauwunsch für die erste Kommunikationsendeinrichtung KE1 signalisiert. Die Vermittlungsanlage PBX1 meldet diesen Wunsch über die Computer-Telefonanlagen-Kopplung CTI1 an die erste Rechnereinrichtung RE1. Auf dieser läuft ein bisher nicht näher spezifizierter dauerhafter Prozess, der aufgrund der eingehenden Benachrichtigung analysiert, welche Fenster zur Zeit aktiv sind und welches der aktiven Fenster auf der ersten Rechnereinrichtung RE1 den Eingabefokus aufweist. Dies sei im vorliegenden Fall der Prozess mit dem Prozessfenster P1. Aus diesem Prozessfenster P1 wird im vorliegenden Beispiel nun die Betreffzeile der Email ausgelesen und an die erste Vermittlungsanlage PBX1 übermittelt.

Nach Eingang dieser Information baut nun die erste Vermittlungsanlage PBX1 eine Verbindung zur zweiten Vermittlungsanlage PBX2 bzw. darüber hinaus zur zweiten Kommunikationsendeinrichtung KE2 auf. Dies sei eine Rufaufbausignalisierungsverbindung, mittels der übliche zum Rufaufbau benötigte Informationen ausgetauscht werden und zusätzlich die an der Rechnereinrichtung RE1 ermittelte Betreffzeile als wiedergebbare Information übermittelt wird. Die Übertragung erfolgt dabei vorzugsweise in einem optionalen Element der Signalisierungsverbindung.

Aufgrund der eingehenden Signalisierung leitet nun die Vermittlungsanlage PBX2 den Rufaufbauwunsch an die zweite Kommunikationsendeinrichtung KE2 weiter. An dieser wird daraufhin mittels üblichen Rufton und optischen Signalisierungen - blinken einer LED (Light Emitting Diode) oder Anzeige an der Anzeigeeinheit DISP - der eingehende Verbindungsaufbauwunsch dem zweiten Teilnehmer signalisiert.

Darüber hinaus wird erfindungsgemäß auf der Anzeigeeinheit DISP die übermittelte wiedergebbare Information, d.h. die ursprüngliche Betreffzeile der Email, ausgegeben. Dies erfolgt bereits bei Aufbau bzw. im Zustand der Signalisierung der Kommunikationsverbindung und somit vor dem eigentlichen Durchschalten dieser Nutzdatenverbindung.

Zusätzlich kann durch die zweite Vermittlungsanlage PBX2 über die zweite Computer-Telefonanlagen-Kopplung CTI2 die auszugebende Information ebenfalls an die zweite Rechnereinrichtung KE2 übermittelt werden, so dass an dieser mittels des Anzeigefensters AUSG ebenfalls die Betreffzeile der ursprünglichen Email angezeigt werden kann. Für den zweiten Teilnehmer ergibt sich somit der Vorteil, dass er zumindest an einer seiner beiden Endeinrichtungen KE2 und RE2 die Betreffzeile der ursprünglichen Email lesen kann, bevor er den eigentlichen Telefonanruf annimmt. Somit besteht für ihn die Möglichkeit bereits den eigentlichen Kontext der folgenden Telefonverbindung zu ermitteln, so dass keine langwierige verbale Aufsynchronisierung der Teilnehmer bezüglich Wissensstand für die folgende an den Kommunikationsendeinrichtungen KE1 und KE2 geführte Diskussion nötig wird.

Die Ausgabe an der Anzeigeeinheit DISP bzw. dem Anzeigefenster AUSG kann dabei individuell für die jeweilige darstellende Endeinrichtung - hier KE2 und/oder RE2 - angepasst werden. Beispielsweise ist bei einer Anzeigeeinheit DISP der Kommunikationsendeinrichtung KE2 üblicherweise die Anzahl der anzeigbaren Textstellen deutlich begrenzt, so dass eine Verkürzung der übermittelten Information eventuell erforderlich sein könnte. Diese Verkürzung kann beispielsweise in der zweiten Vermittlungsanlage PBX2 erfolgen, da diese evtl. die Ausgabe-Fähigkeiten der konfigurierten Kommunikationsendeinrichtungen kennt. Demgegenüber weist ein Anzeigefenster AUSG an der Rechnereinrichtung RE2 üblicherweise ein weiteres Spektrum an Ausgabemöglichkeiten auf. Beispielsweise kann eine Ausgabe über mehrere Zeilen erfolgen oder aber eine Ausgabe sogar mit Multimediainhalten bzw. Grafikinhalten angereichert werden.

Alternativ zur darstellten Ausführung kann auch die Rufaufbausignalisierung über die Telefonverschaltungen TV und den Vermittlungsanlagen PBX1, PBX2 mit bekannten Übermittlungsverfahren durchgeführt werden, jedoch die Übertragung der wiedergebbaren Informationen über eine dazu parallel aufzubauende Datenverbindung über ein lokales Netzwerk LAN erfolgen. Ein Protokoll kann hierbei proprietärer Natur sein oder es kann ein bestehendes Protokoll zum Austausch von Nachrichten zwischen zwei Rechnereinrichtungen RE1 und RE2 entsprechend erweitert werden. Bei Empfang der wiedergebbaren Information kann daraufhin diese an der zweiten Rechnereinrichtung RE2 ausgegeben werden oder über die Computer-Telefonanlagen-Kopplung CTI2 an die zweite Kommunikationsendeinrichtung KE2 übergeben werden.

Eine Übertragung über eine Datenverbindung hat dabei insbesondere den Vorteil, dass es im Rahmen von DatenÜbertragungen bereits für jegliche Art von zu übertragenden Medien bereits dazu vorgesehene spezifische Protokolle oder Protokollelemente existieren, die im Rahmen des erfindungsgemäßen Verfahrens eingesetzt werden können.

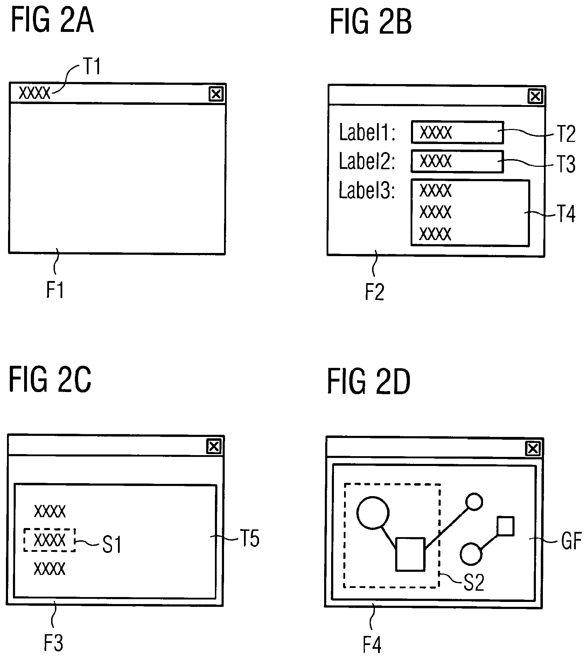

In Figur 2 sind verschiedene Darstellungen eines Prozessfensters angedeutet. Anhand dieser Darstellungen soll im Folgenden erläutert werden, welche Art von Informationen beispielsweise an die zweite Kommunikationsendeinrichtung KE2 übermittelt werden können. Im ersten Beispiel gemäß Figur 2A ist ein Ausgabefenster F1 dargestellt, in dem ein beliebiger Inhalt ausgegeben wird. Darüber hinaus weist das Ausgabefenster F1 eine Kopfzeile auf, wie sie bei üblichen Fensteranwendungen einer Benutzeroberfläche einer Rechnereinrichtung üblich ist. Die Kopfzeile umfasst dabei einen textuellen Inhalt, der in der Figur lediglich durch "XXXX" angedeutet ist. Diese Zeichenkette wird in der Figur als Textfeld T1 bezeichnet.

Die Kopfzeile bzw. der Inhalt des Textfeldes T1 kann bevorzugt zur Übertragung ausgewertet werden, da üblicherweise eine Kopfzeile thematisch prägnant zusammenfasst, um welchen Inhalt es sich bei dem Inhalt des dargestellten Ausgabefensters F1 des Prozesses handelt. Darüber hinaus ist vorteilhaft, dass eine Kopfzeile lediglich eine beschränkte Anzahl von Zeichen darstellen kann und die Anzahl an Zeichen möglicherweise in einer ähnlichen Größenordnung ist, wie die Darstellungsmöglichkeit in einer Anzeigeeinheit einer Telefon-Kommunikationsendeinrichtung. Folglich ist vorzugsweise keinerlei Konvertierung oder weitergehende Beschneidung der zu übertragenden Information notwendig, kann jedoch bei Bedarf durchgeführt werden.

In Figur 2B ist eine übliche Benutzeroberfläche F2 einer Rechnereinrichtung angedeutet, indem verschiedene Beschriftungen und verschiedene Textfelder, die für eine Ausgabe vorgesehen sind, dargestellt sind. Die Beschriftungen sind in der Figur als "Label1", "Label2" und "Label3" angedeutet. Die Textfelder sind als T2, T3 und T4 bezeichnet, wobei die Inhalte der Textfelder wie im vorhergehenden Beispiel lediglich durch "XXXX" angedeutet sind. Beispielsweise könnte Label1 bezeichnen, dass es sich bei dem Textfeld T2 um eine Absende-Email-Adresse einer Email handelt. Label2 kann dabei den Inhalt des Textfeldes T3 bezeichnen, dass in diesem beispielsweise der Betreff einer Email dargestellt ist. Im Textfeld T4 sei beispielsweise der Nutztext einer Email dargestellt. Für das erfindungsgemäße Verfahren wird in einem derartigen Fall angenommen, dass insbesondere eine im Textfeld T3 angegebene Betreffzeile, eine besondere Relevanz hat, die einem angerufenen Teilnehmer helfen könnte, den Kontext der folgenden Kommunikationsverbindung schnell und einfach zu verstehen und zu erfassen. Somit könnte der Inhalt des Textfeldes T3 als wiedergebbare Information übermittelt werden. Alternativ könnte aber auch aus dem Textfeld T4 ein Inhalt extrahiert werden, der die Thematik der dargestellten Email beschreibt und folglich vorzugsweise als wiedergebbare Information übermittelt werden könnte. Eine Extraktion aus einem längeren Textfeld kann dabei aufgrund expertensystemartiger oder regelbasierter Analysen erfolgen.

Alternativ kann eine Extraktion auch basierend auf einer Benutzer-Selektion eines Abschnitts in einem Textfeld erfolgen. Dies ist in Figur 2C schematisch angedeutet. Eine Selektion wird dabei in üblichen Benutzeroberflächen durch Invertieren der Schrift und der Hintergrundfarbe oder durch einen gestrichelten Rahmen dargestellt. Eine Selektion kann durch Tastatureingaben - beispielsweise durch Drücken der Umschalt-Taste und durch Bewegen des Cursors - oder durch Mausaktionen - beispielsweise durch Gedrückthalten eines der Mausknöpfe und Bewegen des Mauszeigers - erfolgen.

In Figur 2C ist auf einer Benutzeroberfläche F3 ein Textfeld T5 dargestellt, dass ebenfalls über mehrere Zeilen textuelle Inhalte umfasst. Hierbei sei angenommen dass ein Teil des Textfeldes durch den ersten Teilnehmer selektiert worden ist. Die Selektion ist hierbei durch ein strichpunktiertes Rechteck dargestellt und wird als Selektion S1 bezeichnet. Diese Selektion kann nun komplett oder nach weiterer Nachbearbeitung als wiedergebbare Information an den zweiten Teilnehmer übermittelt werden.

Figur 2D zeigt nun eine entsprechende Vorgehensweise, wenn es nicht um rein textuelle Inhalte geht, sondern alternativ oder zusätzlich um grafische Inhalte. Hierbei sei im Prozessfenster F4 ein Grafikfeld GF dargestellt, dass mehrere vektororientierte oder bitmap-orientierte grafische Informationen umfasst. Auch hierbei kann die komplette Darstellung als wiedergebbare Information extrahiert und übermittelt werden, oder es kann eine Selektion S2 ausgewertet werden - als gestricheltes Rechteck veranschaulicht -, durch die ein Teil der Grafik selektiert ist. Diese Selektion S2 kann nun für eine Übertragung als wiedergebbare Information extrahiert werden. Vor einer Übertragung kann jedoch vorzugsweise eine Umkodierung der selektierten Grafik erfolgen, so dass eine Repräsentation der Grafik erreicht wird, die sich besonders gut -insbesondere bzgl. der Bandbreitenanforderungen - für eine Übertragung eignet.

Während die dargestellten Ausführungen bisher lediglich auf eine Kopplung zwischen einem Arbeitsplatzrechner und einer Telefon-Endeinrichtung optimiert sind, kann beim ersten Teilnehmer anstelle einer Rechnereinrichtung RE1 jede beliebige andere Art von Endeinrichtung gekoppelt sein, aus der eine Information extrahiert werden kann. Beispielsweise kann es sich bei der erfindungsgemäß als zweite Endeinrichtung bezeichneten Endeinrichtung um ein Fernsehgerät handeln, bei dem beispielsweise eine Videotextfunktion vorgesehen ist. Beim dargestellten Videotextinhalt kann vorgesehen sein, einen Teil des Videotextinhaltes bei Initiieren einer Kommunikationsverbindung zu extrahieren und als wiedergebbare Information zu übermitteln. Dies kann beispielsweise eine Art Überschrift der Videotextseite oder erneut eine durch den Benutzer erfolgte Selektion sein. Alternativ kann auch bei einem Fernseher das Fernsehbild analysiert werden. Beispielsweise kann ein Standbild generiert werden und daraus ein Teil als extrahierte Grafik als wiedergebbare Information übermittelt werden. Darüber hinaus zeichnen sich gewisse Fernsehprogramme dadurch aus, neueste Nachrichten in einer Art Laufband darzustellen. Auch hier kann es möglich sein, den Inhalt eines Laufbandes zu extrahieren und als wiedergebbare Information grafisch bzw. nach Wandlung textuell an den zweiten Teilnehmer zu übermitteln.

Auch eine Kopplung zu einer weiteren Endeinrichtung wie beispielsweise eine Waschmaschine oder andere Haushaltsgeräte ist denkbar, beispielsweise wenn bei einem Anruf an einen Servicetechniker bereits als wiedergebbare Information eine Art Fehlercode bei einem aufgetretenen Fehler ermittelt werden könnte.

Die Erfindung zeichnet sich weiterhin dadurch aus, dass in bestimmten Situation die Kommunikationsverbindung durch den zweiten Teilnehmer überhaupt nicht angenommen und durchgeschaltet werden braucht, da evtl. bereits die wiedergebbare Information ausreicht, um den ersten oder den zweiten Teilnehmer zufrieden zu stellen. Dies kann der Fall sein, wenn beispielsweise der zweite Teilnehmer eine klar formulierte Frage per Email geschickt hat und der erste Teilnehmer eine als Antwort anzusehenden Text derart auswählt, dass dieser Text als wiedergebbare Information übermittelt wird.

Analog dazu, kann bei Abwesenheit des zweiten Teilnehmers die übermittelte wiedergebbare Information für die Zusammenstellung einer Anruferliste von entgangenen Anrufen dergestalt ausgewertet werden, dass die wiedergebbare Information dem zweiten Teilnehmer in der Anruferliste zusammen mit der Uhrzeit des Anrufs und dem Absender des Anrufs angezeigt wird. Weiterhin kann die übermittelte wiedergebbare Information auch für einen Anrufbeantworter-Dienst verwendet werden, bei dem zu jeder gespeicherten Sprachnachricht die wiedergebbare Information der Sprachnachricht zugeordnet gespeichert werden kann, so dass bei einem menügesteuerten Zugriff auf einem Display oder mittels generierter Sprachausgabe die wiedergebbare Information ausgegeben werden kann, so dass ein komfortables Durchsuchen von gespeicherten Sprachnachrichten möglich ist, ohne die Sprachnachrichten abzuhören.

In einer vorteilhaften Ausgestaltung kann darüber hinaus vorgesehen sein, die Übertragung der wiedergebbaren per Anruf oder für einen evtl. auch unbestimmten Zeitraum zu deaktivieren, da es möglicherweise nicht immer im Sinne des ersten Teilnehmers ist, dass eine wiedergebbare Information zu zweiten Teilnehmer übermittelt wird.

Die Erfindung ist insbesondere auch bei so genannten Multiple Line Appearances, bei Anrufgruppen oder so genannten Chef-Sekretär-Schaltungen vorteilhaft einzusetzen. Diese genannten Leistungsmerkmale zeichnen sich dadurch aus, dass zu einem Anruf zu einer ersten Person mindestens einer zweiten Person der Anruf ebenfalls durch einen kurzen Klingelton, blinken einer LED und/oder durch Anzeige in einem Display mitgeteilt wird, so dass die zweite Person den Anruf annehmen kann. Die Rufannahme erfolgt dabei üblicherweise neben dem Abheben des Telefonhörers auch durch Druck einer Taste oder Auswahl eines Menüpunktes. Hierbei lässt sich das Verfahren insbesondere deshalb vorteilhaft einsetzen, weil an der Endeinrichtung der zweiten Person ebenfalls die wiedergebbare Information angezeigt werden kann. Somit besteht für die zweite Person ein einfaches Kriterium zu entscheiden, ob er diesen Anruf übernehmen soll.

## Patentansprüche

1. Verfahren zum Betreiben einer Kommunikationsverbindung zwischen einer einem ersten Teilnehmer zugeordneten ersten Kommunikationsendeinrichtung (KE1), die an eine Vermittlungsanlage (PBX1) gekoppelt ist, und zumindest einer einem zweiten Teilnehmer zugeordneten ersten Endeinrichtung (KE2), bei dem
- von der ersten Kommunikationsendeinrichtung (KE1) an die Vermittlungsanlage (PBX1) eine Rufaufbauwunschbenachrichtigung zum Initiieren der Kommunikationsverbindung signalisiert wird,
- für einen auf einer mit der ersten Kommunikationsendeinrichtung (KE1) interagierenden durch den ersten Teilnehmer zu bedienenden und mit der Vermittlungsanlage (PBX1) gekoppelten zweiten Endeinrichtung (RE1) als Anwendung ablaufenden Prozess, der frei von Funktionen zum Steuern der Kommunikationsverbindung ist, aus einer durch den Prozess bewirkten Ausgabe (P1) an der zweiten Endeinrichtung (RE1) aufgrund der von der Vermittlungsanlage (PBX1) an die zweite Endeinrichtung (RE1) signalisierten Rufaufbauwunschbenachrichtigung zumindest eine an einer Endeinrichtung wiedergebbare Information extrahiert wird, wobei diejenige Anwendung ausgewählt wird, in der sich ein Eingabefokus, beispielsweise eine blinkende Eingabeaufforderung, befindet und/oder die sich im Vordergrund aller von der zweiten Endeinrichtung (RE1) dargestellten Fenster befindet,
- bei Initiieren der Kommunikationsverbindungdurch die Vermittlungsanlage (PBX1) zwischen der ersten Kommunikationsendeinrichtung (KE1) und der ersten Endeinrichtung (KE2) die wiedergebbare Information zu mindestens einer der zum zweiten Teilnehmer zugeordneten mindestens einen Endeinrichtung (KE2, RE2) übermittelt wird.

2. Verfahren nach einem der vorhergehenden Ansprüche, **dadurch gekennzeichnet,**
**dass** die Auswahl der als Ziel zur Übermittlung der wiedergebbaren Information ausgewählten Endeinrichtung (KE2, RE2) derart erfolgt, dass diejenige Endeinrichtung ausgewählt wird, die für eine Ausgabe der wiedergebbaren Information ausgebildet ist.

3. Verfahren nach einem der vorhergehenden Ansprüche, **dadurch gekennzeichnet,**
**dass** die übermittelte wiedergebbare Information an der ausgewählten Endeinrichtung ausgegeben wird.

4. Verfahren nach einem der vorhergehenden Ansprüche, **dadurch gekennzeichnet,**
**dass** die Kommunikationsverbindung eine Signalisierungsverbindung zwischen der ersten Kommunikationsendeinrichtung (KE1) und der ersten Endeinrichtung (KE2) umfasst, und die Übermittlung der wiedergebbaren Information im Rahmen der Signalisierungsverbindung, vorzugsweise in einem optionalen Element der Signalisierungsverbindung, erfolgt.

5. Verfahren nach einem der vorhergehenden Ansprüche, **dadurch gekennzeichnet,**
**dass** zwischen der ersten Endeinrichtung (KE2) und der zweiten Endeinrichtung (RE2) eine Datenverbindung aufgebaut wird, und die Übermittlung der wiedergebbaren Information im Rahmen der Datenverbindung erfolgt.

6. Verfahren nach einem der vorhergehenden Ansprüche, **dadurch gekennzeichnet,**
**dass** es sich bei dem Prozess um eine Anwendung zur Kommunikation mit elektronischen Nachrichten handelt und die durch den Prozess bewirkte Ausgabe ein Inhalt einer elektronischen Nachricht oder ein Inhalt eines Anhang zu einer elektronischen Nachricht darstellt.

7. Verfahren nach einem der vorhergehenden Ansprüche, **dadurch gekennzeichnet,**
**dass** für das Extrahieren der wiedergebbaren Information von der durch den Prozess bewirkten Ausgabe lediglich der sichtbare Bereich und/oder eine Kopfzeile einer Benutzeroberfläche ausgewertet wird.

8. Verfahren nach einem der vorhergehenden Ansprüche, **dadurch gekennzeichnet,**
**dass** eine Betreff-Zeile einer elektronischen Nachricht zum Extrahieren der wiedergebbaren Information ausgewertet wird.

9. Verfahren nach einem der vorhergehenden Ansprüche, **dadurch gekennzeichnet,**
**dass** die wiedergebbaren Information als zumindest eine Zeichenkette und/oder eine elektronische Grafik und/oder ein Video ausgestaltet ist.

10. Verfahren nach einem der vorhergehenden Ansprüche, **dadurch gekennzeichnet,**
**dass** an der ersten Endeinrichtung (KE2) bei Signalisieren der eingehenden Kommunikationsverbindung und nach Anzeige der wiedergebbaren Information dem zweiten Teilnehmer eine Aktivierung des Leistungsmerkmals Rufumleitung angeboten wird.

11. Verfahren nach einem der vorhergehenden Ansprüche, **dadurch gekennzeichnet,**
**dass** aufgrund eines Inhalts der übermittelten wiedergebbaren Information eine Umleitung der Kommunikationsverbindung von der ersten Endeinrichtung (KE2) zu einer weiteren Kommunikationsendeinrichtung erfolgt.

12. Verfahren nach einem der vorhergehenden Ansprüche, **dadurch gekennzeichnet,**
**dass** ein regelbasiertes System vorgesehen ist, bei dem mindestens eine Regel für jeweils eine vorgegebene Vergleichsinformation definiert wird und für die mindestens eine Regel eine auf die Kommunikationsverbindung anwendbare Aktion der Regel zugeordnet vorgegeben wird,
für jede der mindestens einen Regel der Inhalt der übermittelten wiedergebbaren Information mit der Vergleichsinformation der jeweiligen Regel auf Übereinstimmung geprüft wird,
bei Übereinstimmung die der betreffenden Regel zugeordneten Aktion für die Kommunikationsverbindung ausgeführt wird.

13. Verfahren nach einem der vorhergehenden Ansprüche, **dadurch gekennzeichnet,**
**dass** die wiedergebbare Information entsprechend der Ausgabemöglichkeiten der der zum zweiten Teilnehmer zugeordneten mindestens einen Endeinrichtung (KE2, RE2) verändert wird.

14. Verfahren nach einem der vorhergehenden Ansprüche, **dadurch gekennzeichnet,**
**dass** das Extrahieren der wiedergebbaren Information bereits vor dem Initiieren der Kommunikationsverbindung erfolgt und die wiedergebbare Information bis zum Initiieren der Kommunikationsverbindung vorgehalten wird.

15. Kommunikationsanordnung, umfassend
- eine erste Kommunikationsendeinrichtung (KE1) zum Betreiben einer Kommunikationsverbindung zwischen der einem ersten Teilnehmer zugeordneten ersten Kommunikationsendeinrichtung (KE1) und zumindest einer einem zweiten Teilnehmer zugeordneten ersten Endeinrichtung (KE2),
- die erste Endeinrichtung (KE2) zum Betreiben der Kommunikationsverbindung,
- eine Vermittlungsanlage (PBX1), an die die erste Kommunikationsendeinrichtung (KE1) gekoppelt ist, wobei von der ersten Kommunikationsendeinrichtung (KE1) an die Vermittlungsanlage (PBX1) eine Rufaufbauwunschbenachrichtigung zum Initiieren der Kommunikationsverbindung signalisierbar ist, und
- eine zweite Endeinrichtung (RE1), die mit der Vermittlungsanlage (PBX1) gekoppelt ist,
a) zum Ausführen eines auf der mit der ersten Kommunikationsendeinrichtung (KE1) interagierenden zweiten Endeinrichtung (RE1) als Anwendung ablaufenden Prozesses, der frei von Funktionen zum Steuern der Kommunikationsverbindung ist, wobei die zweite Endeinrichtung (RE1) durch den ersten Teilnehmer zu bedienen ist, und
b) zum Extrahieren zumindest einer an einer Endeinrichtung wiedergebbaren Information aus einer durch den Prozess bewirkten Ausgabe aufgrund der von der Vermittlungsanlage (PBX1) an die zweite Endeinrichtung (RE1) signalisierten Rufaufbauwunschbenachrichtigung, wobei diejenige Anwendung auswählbar ist, in der sich vor dem Initiieren der Kommunikationsverbindung ein Eingabefokus, beispielsweise eine blinkende Eingabeaufforderung, befindet und/oder die sich im Vordergrund aller von der zweiten Endeinrichtung (RE1) dargestellten Fenster befindet, wobei bei Initiieren der Kommunikationsverbindung durch die Vermittlungsanlage (PBX1) zwischen der ersten Kommunikationsendeinrichtung (KE1) und der ersten Endeinrichtung (KE2) die wiedergebbare Information zu mindestens einer der zum zweiten Teilnehmer zugeordneten mindestens einen Endeinrichtung (KE2, RE2) übermittelbar ist.

## Claims

1. A method for operating a communications connection between a first communications terminal device (KE1) allocated to a first participant and connected to a switchboard (PBX1), and at least one first terminal device (KE2) allocated to a second participant, wherein
- a call setup request notification for initiating said communications connection is signalled from the first communications terminal device (KE1) to the switchboard (PBX1)
- for a process running as an application on a second terminal device (RE1) that is interacting with said first communications terminal device (KE1) that is to be operated by the first participant and coupled with said switchboard (PBX1), said process being free of functions for controlling said communications connection, at least one piece of information that is reproducible on a terminal device is extracted from an output (P1) effected by said process at said second terminal device (RE1) based on said call setup request notification signalled from said switchboard (PBX1) to said second terminal device (RE1), wherein such application is selected, in which there is an input focus, for example a flashing input prompt, and/or which is located in the foreground of all windows represented by said second terminal device (RE1),
- upon initiating said communications connection between said first communications terminal device (KE1) and said first terminal device (KE2) by said switchboard (PBX1) said reproducible information is transmitted to at least one terminal device (KE2, RE2) allocated to said second participant.

2. The method according to one of the preceding claims, **characterised in that**,
selecting said terminal device (KE2, RE2) selected as a target for transmitting the reproducible information takes place in such a way that such terminal device is selected that is configured to output the reproducible information.

3. The method according to one of the preceding claims, **characterised in that**,
said transmitted reproducible information is output at said selected terminal device.

4. The method according to one of the preceding claims, **characterised in that**,
said communications connection comprises a signalling connection between said first communications terminal device (KE1) and said first terminal device (KE2) and the transmission of said reproducible information within the context of said signalling connection preferably takes place in an optional element of said signalling connection.

5. The method according to one of the preceding claims, **characterised in that**,
a data connection is established between said first terminal device (KE2) and said second terminal device (RE2) and transmitting said reproducible information takes place within the context of said data connection.

6. The method according to one of the preceding claims, **characterised in that**
said process is an application for communicating with emails and the output effected by said process constitutes a content of an email or a content of an email attachment.

7. The method according to one of the preceding claims, **characterised in that**,
for extracting said reproducible information from said output effected by said process only the visible area and/or a header of a user interface is evaluated.

8. The method according to one of the preceding claims, **characterised in that**,
a subject line of an email is evaluated for extracting said reproducible information.

9. The method according to one of the preceding claims, **characterised in that**
said reproducible information is configured as at least a character string and/or an electronic graphics image and/or a video.

10. The method according to one of the preceding claims, **characterised in that**,
activating the performance feature "call forwarding" is offered to said second participant at said first terminal device (KE2) when the incoming communications connection is signalled and after said reproducible information has been displayed.

11. The method according to one of the preceding claims, **characterised in that**,
said communications connection from said first terminal device (KE2) is redirected to another communications terminal device based on the content of the transmitted reproducible information.

12. The method according to one of the preceding claims, **characterised in that**
a rule-based system is provided in which at least one rule is defined for a piece of comparative information and, for said at least one rule, an action of said rule applicable to the communications connection is specified,
for each of said at least one rule, the content of said transmitted reproducible information is tested for agreement with said comparative information of said respective rule,
in case of agreement, said action allocated to said respective rule for said communications connection is performed.

13. The method according to one of the preceding claims, **characterised in that**
said reproducible information is altered according to the output options of said at least one terminal device (KE2, RE2) allocated to said second participant.

14. The method according to one of the preceding claims, **characterised in that**
extracting said reproducible information takes place prior to initiating said communication connection, and said reproducible information is kept in readiness until said communications connection is initiated.

15. Communications arrangement, comprising:
- a first communication terminal device (KE1) for operating a communications connection between said first communication terminal device (KE1) allocated to a first participant (KE1) and at least one first terminal device (KE2) allocated to a second participant,
- said first terminal device (KE2) for operating said communications connection,
- a switchboard (PBX1) to which said first communications terminal device (KE1) is coupled, wherein a call setup request notification for initiating the communications connection can be signalled by said first communications terminal device (KE1) to said switchboard (PBX1), and
- a second terminal device (RE1) which is coupled to said switchboard (PBX1),
a) for executing a process running as an application on said second terminal device (RE1) that is interacting with said first communications terminal device (KE1), said process being free of functions for controlling said communications connection, wherein said second terminal device (RE1) is to be operated by said first participant, and
b) for extracting at least one piece of information that is reproducible on a terminal device from an output effected by said process based on said call setup request notification signalled from the switchboard (PBX1) to the second terminal device (RE1), wherein such application can be selected, in which, prior to initiating said communications connection, there is an input focus, for example a flashing input prompt, and/or which is located in the foreground of all windows represented by said second terminal device (RE1), wherein upon initiating said communications connection by said switchboard (PBX1) between said first communications terminal device (KE1) and said first terminal device (KE2) said reproducible information can be transmitted to said at least one terminal device (KE2, RE2) allocated to said second participant.

## Revendications

1. Procédé d'exploitation d'une liaison de communication entre un premier dispositif de communication (KE1), associé à un premier abonné, qui est couplé à une installation de centre de commutation (PBX1), et au moins un premier dispositif terminal (KE2) associé à un second abonné, dans lequel
- par le premier dispositif de communication (KE1) est signalisé à l'installation de centre de commutation (PBX1) un message de demande d'établissement d'appel pour déclencher la liaison de communication,
- pour un processus, qui est exempt de fonctions de commande de la liaison de communication, se déroulant en tant qu'application, sur un second dispositif terminal (RE1) devant être servi par le biais du premier abonné interagissant avec le premier dispositif de communication (KE1) et étant couplé à l'installation de centre de commutation (PBX1), à partir d'une sortie (P1) causée par le processus au niveau du second dispositif terminal (RE1) en raison du message de demande d'établissement d'appel signalisé par l'installation de centre de commutation (PBX1) au second dispositif terminal (RE1) est extraite au moins une information reproductible par un dispositif terminal, dans lequel l'application sélectionnée est celle dans laquelle se trouve une cible de saisie, par exemple une demande de saisie clignotante, et/ou celle qui se trouve en avant-plan de toutes les fenêtres représentées par le second dispositif terminal (RE1),
- lors du déclenchement de la liaison de communication par l'installation de centre de commutation (PBX1) entre le premier dispositif de communication (KE1) et le premier dispositif terminal (KE2), l'information reproductible est transmise à au moins un de l'au moins un dispositif terminal (KE2, RE2) associé au second abonné.

2. Procédé selon l'une quelconque des revendications précédentes, **caractérisé**
**en ce que** la sélection du dispositif terminal (KE2, RE2) sélectionné dans le but de la transmission de l'information reproductible est effectuée de manière qu'est sélectionné le dispositif terminal qui est conçu pour une sortie de l'information reproductible.

3. Procédé selon l'une quelconque des revendications précédentes, **caractérisé**
**en ce que** l'information reproductible transmise est sortie vers le dispositif terminal sélectionné.

4. Procédé selon l'une quelconque des revendications précédentes, **caractérisé**
**en ce que** la liaison de communication comprend une liaison de signalisation entre le premier dispositif de communication (KE1) et le premier dispositif terminal (KE2), et en ce que la transmission de l'information reproductible est effectuée dans le cadre de la liaison de signalisation, de préférence dans un élément optionnel de la liaison de signalisation.

5. Procédé selon l'une quelconque des revendications précédentes, **caractérisé en ce que**
une liaison de données est établie entre le premier dispositif terminal (KE2) et le second dispositif terminal (RE2) et **en ce que** la transmission de l'information reproductible est effectuée dans le cadre de la liaison de données.

6. Procédé selon l'une quelconque des revendications précédentes, **caractérisé**
**en ce qu'**il s'agit, quant au processus, d'une application pour la communication avec des messages électroniques et en ce que la sortie causée par le processus représente un contenu d'un message électronique ou un contenu d'une pièce jointe à un message électronique.

7. Procédé selon l'une quelconque des revendications précédentes, **caractérisé**
**en ce que**, pour l'extraction de l'information reproductible par la sortie causée par le processus, seule la zone visible et/ou une ligne d'en-tête d'une interface utilisateur est évaluée.

8. Procédé selon l'une quelconque des revendications précédentes, **caractérisé**
**en ce qu'**une ligne Objet d'un message électronique est évaluée pour l'extraction de l'information reproductible.

9. Procédé selon l'une quelconque des revendications précédentes, **caractérisé**
**en ce que** l'information reproductible est conçue au moins en tant que chaîne de caractères et/ou graphique électronique et/ou vidéo.

10. Procédé selon l'une quelconque des revendications précédentes, **caractérisé**
**en ce que**, sur le premier dispositif terminal (KE2) lors de la signalisation de la liaison de communication arrivante et après l'affichage de l'information reproductible, une activation de la caractéristique fonctionnelle Transfert d'appel est proposée au second abonné.

11. Procédé selon l'une quelconque des revendications précédentes, **caractérisé**
**en ce que**, en raison du contenu de l'information reproductible transmise, est effectué un transfert de la liaison de communication du premier dispositif terminal (KE2) à un autre dispositif de communication.

12. Procédé selon l'une quelconque des revendications précédentes, **caractérisé**
**en ce qu'**il est prévu un système basé sur des règles, dans lequel au moins une règle est définie pour chaque information de comparaison prédéfinie et, pour l'au moins une règle, une action applicable à la liaison de communication est prédéfinie de manière associée à la règle, pour chacune de l'au moins une règle, le contenu de l'information reproductible transmise est vérifié quant à sa concordance avec l'information de comparaison de la règle concernée,
en cas de concordance, l'action associée à la règle concernée est exécutée pour la liaison de communication.

13. Procédé selon l'une quelconque des revendications précédentes, **caractérisé**
**en ce que** l'information reproductible est modifiée conformément aux possibilités de sortie de l'au moins un dispositif terminal (KE2, RE2) associé au second abonné.

14. Procédé selon l'une quelconque des revendications précédentes, **caractérisé**
**en ce que** l'extraction de l'information reproductible est effectuée déjà avant le déclenchement de la liaison de communication et l'information reproductible est retenue jusqu'au déclenchement de la liaison de communication.

15. Système de communication comportant
- un premier dispositif de communication (KE1) pour l'exploitation d'une liaison de communication entre le premier dispositif de communication (KE1) associé à un premier abonné et au moins un premier dispositif terminal (KE2) associé à un second abonné,
- le premier dispositif terminal (KE2) servant à l'exploitation de la liaison de communication,
- une installation de centre de commutation (PBX1), à laquelle le premier dispositif de communication (KE1) est couplé, dans lequel un message de demande d'établissement d'appel pour le déclenchement de la liaison de communication peut être signalisé par le premier dispositif de communication (KE1) à l'installation de centre de commutation (PBX1), et
- un second dispositif terminal (RE1) qui est couplé à l'installation de centre de commutation (PBX1),
a) pour l'exécution d'un processus, se déroulant en tant qu'application sur le dispositif terminal (RE1) interagissant avec le premier dispositif de communication (KE1), qui est exempt de fonctions pour la commande de la liaison de communication, dans lequel le second dispositif terminal (RE1) doit être servi par le premier abonné, et
b) pour l'extraction d'au moins une information, reproductible sur le dispositif terminal, d'une sortie causée par le processus en raison d'un message de demande d'établissement d'appel signalisé par l'installation de centre de commutation (PBX1) au second dispositif terminal (RE1), dans lequel l'application pouvant être sélectionnée est celle dans laquelle, avant le déclenchement de la liaison de communication, se trouve une cible de saisie, par exemple une demande de saisie clignotante, et/ou celle qui se trouve en avant-plan de toutes les fenêtres représentées par le second dispositif terminal (RE1), dans lequel, lors du déclenchement de la liaison de communication par l'installation de centre de commutation (PBX1) entre le premier dispositif de communication (KE1) et le premier dispositif terminal (KE2), l'information reproductible peut être transmise à au moins un de l'au moins un dispositif terminal (KE2, RE2) associé au second abonné.
